# EUROPÄISCHE PATENTSCHRIFT

(11) **EP 2 808 486 B1**
(45) Veröffentlichungstag und Bekanntmachung des Hinweises auf die Patenterteilung: **30.08.2017**
(21) Anmeldenummer: 13169289.9
(22) Anmeldetag: 27.05.2013
(51) Int. Cl.: F01D 5/02, F01D 5/22

(54) **Wuchtkörper für eine Laufschaufelanordnung**
Balancing component for a rotor blade arrangement
Corps d'équilibrage pour un agencement d'aube directrice

(43) Veröffentlichungstag der Anmeldung: 03.12.2014
(73) Patentinhaber: MTU Aero Engines AG, 80995 München (DE)
(72) Erfinder: Feldmann, Manfred, 82223 Eichenau (DE); Hölzel, Andreas, 82211 Herrsching (DE); Frodyma, Amelia, 33-140 Brzozowka (PL)

(56) Entgegenhaltungen:
- EP-A2- 1 605 134
- EP-A2- 2 169 181
- DE-A1-102004 026 365

## Beschreibung

Die vorliegende Erfindung betrifft einen Wuchtkörper zur Befestigung an einem Ring einer Laufschaufelanordnung, eine Laufschaufelanordnung einer Verdichter- oder Turbinenstufe einer Gasturbine mit einem solchen Wuchtkörper sowie ein Verfahren zum Festlegen bzw. Lösen eines solchen Wuchtkörpers von der Laufschaufelanordnung.

Aus der US 5,011,374 ist es bekannt, einen Wuchtkörper *reibschlüssig* durch Crimpen an einem Deckband einer Gasturbinenstufe zu befestigen. Die US 2005/0265845 A1 und US 2012/0087794 A1 schlagen stattdessen vor, den Wuchtkörper formschlüssig an demselben oder zwei benachbarten *Schaufelblättern* abzustützen. Ein weiteres Beispiel ist aus der EP-2169181 bekannt. Dadurch können die Schaufelblätter beeinträchtigt werden.

Eine Aufgabe einer Ausführung der vorliegenden Erfindung ist es, eine Gasturbine zu verbessern.

Diese Aufgabe wird durch einen Wuchtkörper mit den Merkmalen des Anspruchs 1 gelöst. Ansprüche 12, 13 stellen ein Verfahren zum Festlegen bzw. Lösen eines solchen Wuchtkörpers von der Laufschaufelanordnung unter Schutz. Vorteilhafte Ausführungsformen der Erfindung sind Gegenstand der Unteransprüche.

Ein Aspekt der vorliegenden Erfindung betrifft eine Laufschaufelanordnung einer Verdichter- oder Turbinenstufe bzw. für eine Verdichter- oder Turbinenstufe einer Gasturbine sowie eine Gasturbine mit einer solchen Verdichter- oder Turbinenstufe bzw. Laufschaufelanordnung. Die Laufschaufelanordnung weist mehrere in einer Umfangsrichtung benachbarte bzw. verteilte Laufschaufelblätter auf. Diese können lösbar oder dauerhaft an einem Rotor der Turbine(nstufe) befestigt, insbesondere integral mit diesem ausgebildet sein.

Die Laufschaufelanordnung weist einen Ring auf, der einen Strömungskanal für ein Arbeitsmedium der Gasturbine begrenzt. In einer Ausführung ist der Ring ein ein- oder mehrteiliger radial äußerer bzw. Außenring bzw. ein sogenanntes Außendeckband, welches mit einem oder mehreren Laufschaufelblättern verbunden sein kann. Gleichermaßen kann der Ring ein ein- oder mehrteiliger radial innerer bzw. Innenring bzw. eine sogenannte Schaufelplattform sein, welche mit einem oder mehreren Laufschaufelblättern verbunden sein kann.

Ein oder mehrere Wuchtkörper sind bzw. werden, vorzugsweise an einer bzw. mehreren vorgegebenen Umfangspositionen, an dem Ring jeweils zwischen zwei in einer Umfangsrichtung benachbarten Schaufelblättern der Laufschaufelanordnung angeordnet. In einer Ausführung übergreift ein Wuchtkörper in einer Umfangsrichtung eine Trennfuge zwischen zwei benachbarten Ringteilen. Die Masse bzw. Massenverteilung eines Wuchtkörpers kann in einer Ausführung durch Variation einer oder mehrerer Aussparungen und/oder durch Variation einer Wandstärke des Wuchtkörpers dargestellt werden.

Nach einem Aspekt der vorliegenden Erfindung ist ein Wuchtkörper von den benachbarten Schaufelblättern, zwischen denen er angeordnet ist, in einer Umfangsrichtung *beabstandet* und formschlüssig durch einen oder gegensinnig durch zwei axiale Absätze *des Ringes* festlegt. Hierdurch kann in einer Ausführung die Gefahr einer Beeinträchtigung von Schaufelblättern durch Wuchtkörper reduziert werden. Zusätzlich oder alternativ kann die Montage und/oder Demontage von Wuchtkörpern, insbesondere in situ an der in der Gasturbine angeordneten Laufschaufelanordnung, vorzugsweise durch eine Schubdüse der Gasturbine hindurch, verbessert werden.

Dementsprechend weist nach einem Aspekt der vorliegenden Erfindung ein Wuchtkörper zur Befestigung an einem Ring einer Laufschaufelanordnung einer Verdichter- oder Turbinenstufe einer Gasturbine einen ersten *Anschlag* zur formschlüssigen Festlegung des Wuchtkörpers in einer Umfangsrichtung an einem ersten *axialen Absatz* des Ringes auf. Unter einer Festlegung wird vorliegend wenigstens eine Begrenzung eines Spiels in der Umfangsrichtung, in einer Weiterbildung eine drehfeste bzw. - wenigstens im Wesentlichen - spielfreie Befestigung verstanden. In einer weiteren, entgegengesetzten Umfangsrichtung bzw. gegensinnig zum ersten Anschlag-Absatz-Paar kann der Wuchtkörper in einer Ausführung formschlüssig durch einen zweiten Anschlag des Wuchtkörpers an einem zweiten axialen Absatz des Ringes festgelegt werden bzw. sein. Gleichermaßen kann der Wuchtkörper in der weiteren Umfangsrichtung auch durch ein Schaufelblatt der Laufschaufelanordnung festgelegt sein. Die eine Umfangsrichtung kann eine Rotationsrichtung der Gasturbine oder dieser entgegengesetzt sein, die weitere, entgegengesetzte Umfangsrichtung kann dementsprechend der Rotationsrichtung der Gasturbine entgegengesetzt oder die Rotationsrichtung sein. Mit anderen Worten kann das erste Anschlag-Absatz-Paar den Wuchtkörper in oder entgegen der Rotationsrichtung festlegen, ein gegensinniges zweites Anschlag-Absatz-Paar entsprechend entgegen oder in der Rotationsrichtung.

Unter einem Anschlag und einem axialen Absatz wird vorliegend insbesondere eine Fläche, insbesondere eine Stirnfläche, verstanden, die sich, wenigstens im Wesentlichen, in axialer Richtung und in radialer Richtung erstreckt, wobei die Fläche mit der Umfangsrichtung, wenigstens im Wesentlichen, einen rechten Winkel bildet oder auch gegen diese in oder entgegen der Rotationsrichtung abgeschrägt sein kann. Die Stirnfläche kann in einer Ausführung, wenigstens im Wesentlichen, die Wandstärke des übrigen Ringes aufweisen bzw. als Materialvorsprung oder -rückschnitt des Ringes in axialer Richtung ausgebildet sein. Entsprechend kann sich der Absatz in einer Ausführung axial von einer Schaufelblattanordnung der Laufschaufelanordnung fort erstrecken bzw. als axialer Materialvorsprung ausgebildet sein. Hierdurch kann in einer Ausführung vorteilhaft ein Hebelarm zum Begrenzen, insbesondere Verhindern, einer Drehung des Wuchtkörpers um eine radiale Achse vorteilhaft vergrößert werden. Gleichermaßen kann sich der Absatz in einer Ausführung axial zu der Schaufelblattanordnung der Laufschaufelanordnung hin erstrecken bzw. als axialer Materialrückschnitt gegenüber einem axialen Außenrand des Ringes ausgebildet sein. Hierdurch kann in einer Ausführung vorteilhaft ein axialer Überstand des Ringes reduziert bzw. vermieden werden.

Das bzw. die Anschlag-Absatz-Paare können den Wuchtkörper ein- bzw. gegensinning in einer bzw. zwei entgegengesetzten Umfangsrichtungen mit Spiel festlegen bzw. dessen Bewegung in der bzw. den Umfangsrichtungen begrenzen. In einer Weiterbildung kann der Wuchtkörper, wie vorstehend ausgeführt, auch - wenigstens im Wesentlichen spielfrei - drehfestgelegt sein bzw. werden. In einer Weiterbildung ist bzw. wird der Wuchtkörper in der Umfangsrichtung verspannt. Insbesondere hierzu kann in einer Ausführung wenigstens ein Anschlag zur formschlüssigen Festlegung des Wuchtkörpers in einer Umfangsrichtung sich steg- bzw. nasenartig in radialer Richtung erstrecken bzw. in dieser Umfangsrichtung nachgiebig ausgebildet sein.

Zur formschlüssigen Festlegung des Wuchtkörpers in axialer Richtung an dem Ring weist der Wuchtkörper in einer Ausführung einen ersten und einen hiervon axial beabstandeten zweiten Radialflansch auf, der durch einen Axialsteg mit dem ersten Radialflansch verbunden ist. In einer Ausführung übergreifen die beiden Radialflansche zwei axiale Stirnseiten des Ringes und legen diesen so mit oder ohne Spiel axial fest. In einer Weiterbildung ist bzw. wird der Ring zwischen dem ersten und zweiten Radialflansch axial eingespannt. Insbesondere hierzu können der erste und/oder zweite Radialflansch nachgiebig ausgebildet sein.

Ein Radialflansch kann in einer Ausführung in Rotationsrichtung gesehen zum Ring hin konvergieren, insbesondere in Rotationsrichtung abgeschrägt sein. Auf diese Weise kann in einer Ausführung ein Verhaken des Radialflansches verhindert werden.

In einer Ausführung kann ein Anschlag zur formschlüssigen Festlegung des Wuchtkörpers in einer Umfangsrichtung an einem Radialflansch angeordnet, insbesondere integral mit diesem ausgebildet sein. Dabei können in einer Ausführung der erste und zweite Anschlag auf in Umfangsrichtung gegenüberliegenden Seiten desselben Radialflansches angeordnet sein. In einer anderen Ausführung ist der erste Anschlag an dem ersten Radialflansch angeordnet, der zweite Anschlag an der in Umfangsrichtung gegenüberliegenden Seite des axial beabstandeten zweiten Radialflansches. Hierdurch kann in einer Ausführung eine Verdrehsicherheit des Wuchtkörpers verbessert werden.

Der Anschlag kann sich, wie vorstehend ausgeführt, steg- bzw. nasenartig in radialer Richtung erstrecken. Entsprechend kann ein steg- bzw. nasenartiger Anschlag durch einen radialen Einschnitt in einem Radialflansch ausgebildet sein. Auf diese Weise kann der stegartige Anschlag in einer Umfangsrichtung in den Einschnitt hinein elastisch oder plastisch nachgeben.

Zur formschlüssigen Festlegung des Wuchtkörpers in radialer Richtung an dem Ring weist der Wuchtkörper in einer Ausführung eine oder zwei, insbesondere axial beabstandete, Hinterschneidungen auf, die den Ring hinter- bzw. untergreifen. Eine Hinterschneidung kann in einer Weiterbildung an einem Radialflansch zur formschlüssigen Festlegung des Wuchtkörpers in axialer Richtung angeordnet, insbesondere integral mit diesem ausgebildet sein. Zusätzlich oder alternativ kann die Hinterschneidung an einem Anschlag zur formschlüssigen Festlegung des Wuchtkörpers in einer Umfangsrichtung angeordnet, insbesondere integral mit diesem ausgebildet sein. Auf diese Weise können die Festlegungen in Umfangs-, radialer und/oder axialer Richtung vereinigt sein bzw. werden. Entsprechend kann in einer Ausführung eine Hinterschneidung einen axialen Absatz des Ringes hinter- bzw. untergreifen, an dem ein Anschlag des Wuchtkörpers diesen formschlüssigen in einer Umfangsrichtung festlegt. In einer Ausführung ist eine Hinterschneidung durch eine umgeschlagene Lasche ausgebildet, die zugleich einen Anschlag zur formschlüssigen Festlegung des Wuchtkörpers in Umfangsrichtung bildet.

Nach einem Aspekt der vorliegenden Erfindung wird bzw. ist wenigstens ein Anschlag zur formschlüssigen Festlegung des Wuchtkörpers in Umfangsrichtung in axialer Richtung zu den Schaufelblättern der Laufschaufelanordnung hin bzw. von diesen fort elastisch oder plastisch deformiert und so in bzw. außer Flucht, insbesondere in formschlüssigen, vorzugsweise vorgespannten, Kontakt, mit dem in Umfangsrichtung gegenüberliegenden Absatz des Ringes gebracht. Unter einem Fluchten bzw. In-Flucht-Sein wird vorliegend insbesondere eine Anordnung derart verstanden, dass der Absatz eine Weiterbewegung des Anschlags in einer Umfangsrichtung formschlüssig begrenzt, insbesondere dass der Absatz den Anschlag kontaktiert und so eine Weiterbewegung des Anschlags in der Umfangsrichtung formschlüssig verhindert.

So kann in einer Ausführung ein Anschlag des Wuchtkörpers, insbesondere ein, vorzugsweise durch einen Einschnitt definierter, Teil eines Radialflansches des Wuchtkörpers, der den Anschlag definiert, elastisch oder plastisch zum Ring hin gebogen werden bzw. sein, um mit einem axialen Absatz zu fluchten bzw. diesem gegenüberzuliegen und den Wuchtkörper so in Umfangsrichtung festzulegen. Entsprechend kann in einer Ausführung ein Anschlag des Wuchtkörpers, insbesondere ein, vorzugsweise durch einen Einschnitt definierter, Teil eines Radialflansches des Wuchtkörpers, der den Anschlag definiert, elastisch oder plastisch vom Ring weg gebogen werden bzw. sein, um außer Flucht mit einem axialen Absatz zu sein bzw. diesem nicht mehr gegenüberzuliegen, so dass der Wuchtkörper in Umfangsrichtung beweglich ist. In einer Weiterbildung kann durch das elastische oder plastische Deformieren des Radialflansches auch eine Hinterschneidung in bzw. außer Eingriff mit dem Ring, insbesondere dessen axialem Absatz, gebracht und so der Wuchtkörper in radialler Richtung festgelegt bzw. gelöst werden. Der Anschlag kann eine vorgegebene Biegelinie aufweisen, entlang der er elastisch oder plastisch zum Ring hin bzw. vom Ring weg gebogen werden bzw. sein kann. Diese Biegelinie kann insbesondere durch eine Materialverdünnung und/oder einen Einschnitt definiert sein, der in einer Weiterbildung zusätzlich den Anschlag steg- bzw. nasenartig ausbilden kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: einen Teil eines Deckbandes einer Laufschaufelanordnung einer Gasturbine mit einem Wuchtkörper nach einer Ausführung der vorliegenden Erfindung in perspektivischer Ansicht entgegen einer Durchströmungsrichtung;
- Fig. 2:: den Teil des Deckbandes mit dem Wuchtkörper der Fig. 1 in perspektivischer Ansicht in Durchströmungsrichtung;
- Fig. 3:: eine Draufsicht III gemäß Fig. 2;
- Fig. 4:: einen Teil eines Deckbandes einer Laufschaufelanordnung einer Gasturbine mit einem Wuchtkörper nach einer weiteren Ausführung der vorliegenden Erfindung in Fig. 2 entsprechender Darstellung;
- Fig. 5:: eine Draufsicht V gemäß Fig. 4; und
- Fig. 6:: einen Teil eines Deckbandes einer Laufschaufelanordnung einer Gasturbine mit einem Wuchtkörper nach einer weiteren Ausführung der vorliegenden Erfindung in Fig. 5 entsprechender Darstellung.

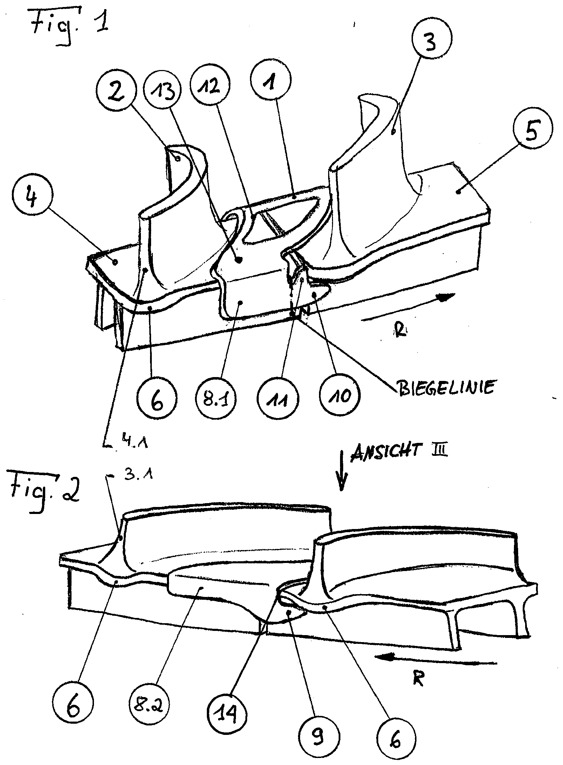

Fig. 1, 2 zeigen in perspektivischen Ansichten entgegen (Fig. 1) bzw. in (Fig. 2) einer Durchströmungsrichtung einen Teil eines Außendeckbandes einer Laufschaufelanordnung einer Niederdruckturbinenendstufe einer Gasturbine mit einem Wuchtkörper 1 nach einer Ausführung der vorliegenden Erfindung.

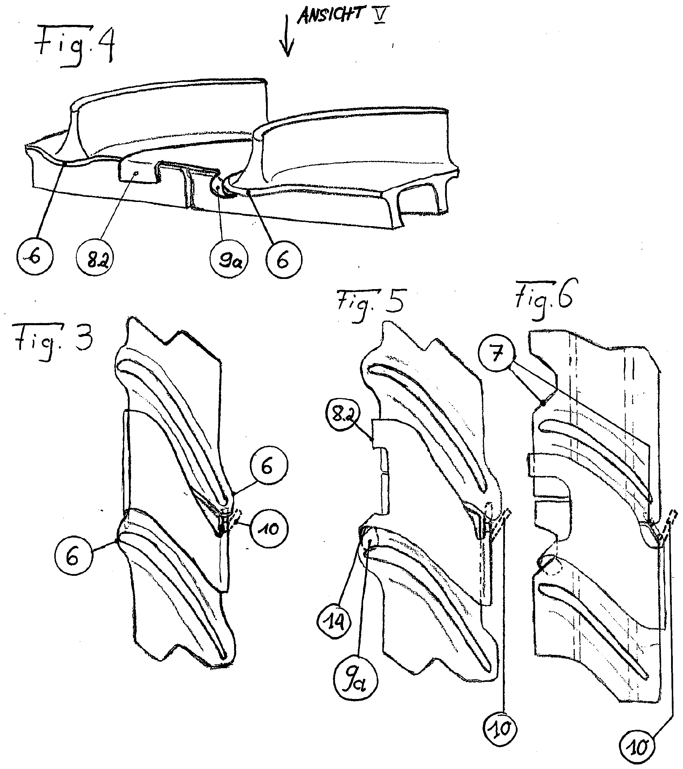

In den Ansichten der Fig. 1, 2 sind zwei Schaufelblätter 2, 3 der Laufschaufelanordnung geschnitten dargestellt, die jeweils integral mit einem Deckband 4 bzw. 5 ausgebildet sind, die - zusammen mit weiteren, nicht dargestellten, Deckbändern, einen Ring in Form eines mehrteiligen Außendeckbandes bilden. Mit 3.1 (vgl. Fig. 2) bzw. 4.1 (vgl. Fig. 1) ist eine Ein- (Fig. 2) bzw. Austrittskante (Fig. 1) eines Schaufelblattes bezeichnet. Zudem ist in Fig. 2 mit III eine Draufsichtsrichtung der Ansicht der Fig. 3 angedeutet.

Jedes Deckband 4, 5 weist auf axial gegenüberliegenden Stirnseiten jeweils einen axialen Absatz 6 auf, der in der Ausführung der Fig. 1-3 durch einen axialen Materialvorsprung ausgebildet ist.

Der Wuchtkörper 1 ist zwischen den zwei in einer Rotationsrichtung R benachbarten Schaufelblättern 2, 3 der Laufschaufelanordnung angeordnet und von diesen in der Rotationsrichtung R beabstandet.

Er weist einen ersten Radialflansch 8.1 (vgl. Fig. 1) und einen hiervon axial beabstandeten zweiten Radialflansch 8.2 (vgl. Fig. 2) auf, die durch einen Axialsteg 13 verbunden sind und das Außendeckband 4, 5 übergreifen, um den Wuchtkörper in axialer Richtung (horizontal in Fig. 3) formschlüssig festzulegen. In dem Axialsteg 13 ist eine Aussparung 12 ausgebildet, um eine vorgegebene Masse bzw. Massenverteilung des Wuchtkörpers einzustellen.

Integral mit dem ersten Radialflansch 8.1 (vgl. Fig. 1) ist ein erster Anschlag 11 des Wuchtkörpers ausgebildet, um den Wuchtkörper in der Rotationsrichtung R an dem ersten axialen Absatz des Außendeckbandes formschlüssig festzulegen. Der erste Anschlag 11 erstreckt sich steg- bzw. nasenartig in radialer Richtung und ist hierzu durch einen radialen Einschnitt definiert. Auf diese Weise ist der stegartige Anschlag 11 in der Rotationsrichtung R nachgiebig ausgebildet.

Integral mit dem zweiten Radialflansch 8.2 (vgl. Fig. 2) ist ein zweiter Anschlag 14 des Wuchtkörpers ausgebildet, um den Wuchtkörpers gegensinnig bzw. entgegen der Rotationsrichtung R an dem axial gegenüberliegenden zweiten axialen Absatz 6 des Außendeckbandes formschlüssig festzulegen.

Beide Radialflansche 8.1, 8.2 konvergieren in Rotationsrichtung R gesehen stirnseitig zum Außendeckband hin (nach oben in Fig. 1, 2), um ein Verhaken mit einem Einlaufbelag (nicht dargestellt) zu vermeiden.

Integral mit dem ersten Radialflansch 8.1 (vgl. Fig. 1) ist eine erste Hinterschneidung 10 ausgebildet, die den ersten axialen Absatz des Außendeckbandes in radialer Richtung (vertikal in Fig. 1, 2) untergreift, um den Wuchtkörper an diesem axialen Absatz in radialer Richtung formschlüssig festzulegen. Entsprechend ist integral mit dem zweiten Radialflansch 8.2 (vgl. Fig. 2) eine zweite Hinterschneidung 9 ausgebildet, die den zweiten axialen Absatz 6 des Außendeckbandes in radialer Richtung untergreift, um den Wuchtkörper an diesem axialen Absatz in radialer Richtung formschlüssig festzulegen.

Zum Festlegen des Wuchtkörpers 1 an dem Außendeckband 4, 5 wird der Wuchtkörper zunächst von radial außen auf das Außendeckband aufgesetzt, so dass seine Radialflansche 8.1, 8.2 dieses axial beidseitig übergreifen. Anschließend wird der Wuchtkörper entgegen der Rotationsrichtung R auf dem Außendeckband verschoben, bis sein zweiter Anschlag 14 den axialen Absatz 6 kontaktiert und so eine Weiterbewegung in dieser Umfangsrichtung formschlüssig verhindert und die zweite Hinterschneidung 9 diesen axialen Absatz 6 untergreift. Dann wird der in Fig. 1 rechte Teil des ersten Radialflansches 8.1, der zunächst - wie in Fig. 3 strichliert angedeutet - plastisch von den Schaufelblättern 2, 3 fort (nach rechts in Fig. 3) gebogen ist, um eine Biegelinie B (vgl. Fig. 1), die den radialen Einschnitt fortsetzt, plastisch zu den Schaufelblättern 2, 3 hin (nach links in Fig. 3) gebogen. Dadurch wird auch der stegartige erste Anschlag 11 in Flucht mit dem axialen Absatz gebracht und dabei verspannt. Zugleich untergreift die erste Hinterscheidung 10 diesen axialen Absatz. Auf diese Weise wird der Wuchtkörper 1 sowohl in radialer als auch in Umfangsrichtung an dem Außendeckband festgelegt. Zur Demontage werden die vorbeschriebenen Schritte in umgekehrter Reihenfolge durchgeführt.

Fig. 4, 5 zeigen in Fig. 2, 3 entsprechender Darstellung eine weitere Ausführung der vorliegenden Erfindung. Übereinstimmende Elemente sind durch identische Bezugszeichen bezeichnet, so dass auf die übrige Beschreibung Bezug genommen und nachfolgend nur auf die Unterschiede zu anderen Ausführungen eingegangen wird.

In der Ausführung der Fig. 4, 5 ist die zweite Hinterschneidung 9a integral mit dem zweiten Anschlag 14 ausgebildet, indem eine Lasche umgeschlagen ist und so zugleich den axialen Absatz 6 untergreift und den Wuchtkörper entgegen der Rotationsrichtung an diesem drehfestlegt. Hiervon in Rotationsrichtung beabstandet legt der zweite Radialflansch 8.2 den Wuchtkörper in axialer Richtung fest. Auf diese Weise können die einzelnen Bereiche des Wuchtkörpers besser auf ihre jeweilige Funktionalität hin optimiert werden bzw. sein. Auf der anderen Seite kann durch die integrale Ausbildung der Fig. 1-3 die Herstellung und/oder Festigkeit verbessert werden bzw. sein. Die Hinterschneidung 9a kann bereits vor dem Aufstecken des Wuchtkörpers 1 auf das Außendeckband 4, 5 ausgebildet sein, der Wuchtkörper entsprechend eingehakt werden. Gleichermaßen kann die Hinterschneidung auch erst nach dem radialen Aufstecken des Wuchtkörpers 1 auf das Außendeckband 4, 5 durch plastisches Umschlagen der Lasche ausgebildet werden bzw. sein.

Fig. 6 zeigt in Fig. 5 entsprechender Darstellung eine weitere Ausführung der vorliegenden Erfindung. Übereinstimmende Elemente sind wiederum durch identische Bezugszeichen bezeichnet, so dass auf die übrige Beschreibung Bezug genommen und nachfolgend nur auf die Unterschiede zu anderen Ausführungen eingegangen wird.

In der Ausführung der Fig. 6 erstrecken sich die axialen Absätze nicht wie in den Ausführungen der Fig. 1-5 axial von der Schaufelblattanordnung 2, 3 der Laufschaufelanordnung fort, sondern axial zu der Schaufelblattanordnung bzw. dem Ring hin. Sie sind entsprechend durch Materialrückschnitte 7 gegenüber einem Rand des Außendeckbandes ausgebildet. Auch in der Ausführung der Fig. 6 wird die erste Hinterschneidung 10 mit dem stegartigen ersten Anschlag 11 (vgl. die insoweit übereinstimmende Fig. 1), die zunächst - wie in Fig. 6 strichliert angedeutet - plastisch von den Schaufelblättern 2, 3 fort (nach rechts in Fig. 6) gebogen ist, um die Biegelinie B (vgl. Fig. 1) plastisch zu den Schaufelblättern 2, 3 hin (nach links in Fig. 6) gebogen. Dadurch wird auch der stegartige erste Anschlag 11 in Flucht mit dem axialen Absatz 7 gebracht und dabei verspannt. Wie vorstehend ausgeführt, wird auch die Kontaktierung der Stirnseite des Materialrückschnitts 7 durch den zum Ring hin einwärts gebogenen Anschlag 11 als Fluchten im Sinne der vorliegenden Erfindung bezeichnet, da diese Anordnung eine Bewegung des Wuchtkörpers in Rotationsrichtung verhindert. Zugleich untergreift die erste Hinterscheidung 10 diesen axialen Absatz. Auf diese Weise wird der Wuchtkörper 1 sowohl in radialer als auch in Umfangsrichtung an dem Außendeckband festgelegt. Zur Demontage werden die vorbeschriebenen Schritte in umgekehrter Reihenfolge durchgeführt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Wuchtkörper
- 2,3: Laufschaufelblatt
- 3.1: Eintrittskante
- 4,5: Deckband
- 4.1: Austrittskante
- 6: Materialvorsprung (axialer Absatz)
- 7: Materialrückschnitt (axialer Absatz)
- 8.1: erster Radialflansch
- 8.2: zweiter Radialflansch
- 9, 9a: zweite Hinterschneidung
- 10: erste Hinterschneidung
- 11: erster Anschlag
- 12: Aussparung
- 13: Axialsteg
- 14: zweiter Anschlag
- R: Rotationsrichtung

## Patentansprüche

1. Laufschaufelanordnung einer Verdichter- oder Turbinenstufe einer Gasturbine mit mehreren Laufschaufeln, einem Wuchtkörper (1) und einem Ring, wobei der Ring entweder ein radial äußerer Ring ist, der durch Außendeckbänder der Laufschaufeln der Laufschaufelanordnung gebildet ist, oder ein radial innerer Ring (4, 5) ist, der durch Schaufelplattformen der Laufschaufeln der Laufschaufelanordnung gebildet ist, **dadurch gekennzeichnet, dass** der Ring einen ersten axialen Absatz (6; 7) aufweist und der Wuchtkörper (1) einen ersten Anschlag (11) aufweist, mit dem er in einer Umfangsrichtung (R) an dem ersten axialen Absatz (6; 7) des Ringes formschlüssig festgelegt ist.

2. Laufschaufelanordnung nach dem vorhergehenden Anspruch, **gekennzeichnet durch** einen zweiten Anschlag (14) zur gegensinnigen formschlüssigen Festlegung des Wuchtkörpers in einer entgegengesetzten Umfangsrichtung an einem zweiten axialen Absatz (6; 7) des Ringes.

3. Laufschaufelanordnung nach einem der vorhergehenden Ansprüche, **gekennzeichnet durch** einen ersten (8.1) und einen hiervon axial beabstandeten und durch einen Axialsteg (13) verbundenen zweiten Radialflansch (8.2) zur formschlüssigen Festlegung des Wuchtkörpers in axialer Richtung an dem Ring.

4. Laufschaufelanordnung nach dem vorhergehenden Anspruch, **dadurch gekennzeichnet, dass** ein Anschlag (11, 14) zur formschlüssigen Festlegung des Wuchtkörpers in einer Umfangsrichtung an dem Radialflansch (8.1, 8.2) angeordnet, insbesondere integral mit diesem ausgebildet ist, und/oder dass der Radialflansch (8.1, 8.2) in einer Rotationsrichtung (R) gesehen zum Ring hin konvergiert.

5. Laufschaufelanordnung nach einem der vorhergehenden Ansprüche, **gekennzeichnet durch** wenigstens eine Hinterschneidung (9, 9a, 10) zur formschlüssigen Festlegung des Wuchtkörpers in radialer Richtung an dem Ring.

6. Laufschaufelanordnung nach dem vorhergehenden Anspruch, **dadurch gekennzeichnet, dass** die Hinterschneidung (9, 9a, 10) an einem Radialflansch (8.1, 8.2) zur formschlüssigen Festlegung des Wuchtkörpers in axialer Richtung und/oder einem Anschlag (11, 14) zur formschlüssigen Festlegung des Wuchtkörpers in einer Umfangsrichtung angeordnet, insbesondere integral mit diesem ausgebildet ist.

7. Laufschaufelanordnung nach einem der vorhergehenden Ansprüche, **dadurch gekennzeichnet, dass** die Hinterschneidung (9, 10) zum Untergreifen eines axialen Absatzes (6; 7) des Ringes zur formschlüssigen Festlegung des Wuchtkörpers in einer Umfangsrichtung ausgebildet ist.

8. Laufschaufelanordnung nach einem der vorhergehenden Ansprüche, **dadurch gekennzeichnet, dass** ein Anschlag (11) zur formschlüssigen Festlegung des Wuchtkörpers in einer Umfangsrichtung sich stegartig in radialer Richtung erstreckt.

9. Laufschaufelanordnung nach einem der vorhergehenden Ansprüche, **dadurch gekenntzeichnet,** dass ein Anschlag (11) zur formschlüssigen Festlegung des Wuchtkörpers in einer Umfangsrichtung (R) durch, insbesondere plastische, Deformation in Flucht mit dem Absatz (6; 7) gebracht ist.

10. Laufschaufelanordnung nach einem der vorhergehenden Ansprüche, **dadurch gekennzeichnet, dass** der axiale Absatz sich axial von einer Schaufelblattanordnung der Laufschaufelanordnung fort (6) oder zu der Schaufelblattanordnung hin (7) erstreckt.

11. Laufschaufelanordnung nach einem der vorhergehenden Ansprüche, **dadurch gekennzeichnet, dass** der Wuchtkörper zwischen zwei in einer Umfangsrichtung benachbarten Schaufelblättern (2, 3) der Laufschaufelanordnung angeordnet und von diesen beabstandet ist.

12. Verfahren zum Festlegen eines Wuchtkörpers (1) an dem Ring (4, 5) einer Laufschaufelanordnung nach einem der vorhergehenden Ansprüche, wobei wenigstens ein Anschlag (11, 14) zur formschlüssigen Festlegung des Wuchtkörpers in einer Umfangsrichtung an einem axialen Absatz (6; 7) des Ringes, insbesondere plastisch, in Flucht mit dem Absatz gebracht wird.

13. Verfahren zum Lösen eines Wuchtkörpers (1) von dem Ring (4,5) einer Laufschaufelanordnung nach einem der Ansprüche 1-11, wobei wenigstens ein Anschlag (11, 14) zur formschlüssigen Festlegung des Wuchtkörpers in einer Umfangsrichtung an einem axialen Absatz (6; 7) des Ringes, insbesondere plastisch, außer Flucht mit dem Absatz gebracht wird.

## Claims

1. A rotor blade arrangement of a compressor or turbine stage of a gas turbine, comprising a plurality of rotor blades, a balancing body (1), and a ring, wherein the ring is either a radially outer ring that is formed of outer shrouds of the rotor blades of the rotor blade arrangement, or is a radially inner ring (4, 5) that is formed of blade platforms of the rotor blades of the rotor blade arrangement, **characterized in that** the ring comprises a first axial shoulder (6; 7), and the balancing body (1) comprises a first stop (11) with which it is attached in a form-fitting manner in one peripheral direction (R) to the first axial shoulder (6; 7) of the ring.

2. The rotor blade arrangement according to the preceding claim, **characterized by** a second stop (14) for the interlocking form-fitting attachment of the balancing body in a opposite peripheral direction to a second axial shoulder (6; 7) of the ring.

3. The rotor blade arrangement according to any of the preceding claims, **characterized by** a first radial flange (8.1) and a second radial flange (8.2) axially distanced therefrom and connected thereto by an axial web (13), for form-fitting attachment of the balancing body to the ring in the axial direction.

4. The rotor blade arrangement according to the preceding claim, **characterized in that** a stop (11, 14) for the form-fitting attachment of the balancing body in a peripheral direction is arranged on the radial flange (8.1, 8.2), in particular, is formed integrally therewith, and/or **in that** the radial flange (8.1, 8.2) converges toward the ring, as seen in one direction of rotation (R).

5. The rotor blade arrangement according to any of the preceding claims, **characterized by** at least one undercut section (9, 9a, 10) for the form-fitting attachment of the balancing body to the ring in the radial direction.

6. The rotor blade arrangement according to the preceding claim, **characterized in that** the undercut section (9, 9a, 10), is arranged on a radial flange (8.1, 8.2) for the form-fitting attachment of the balancing body in the axial direction, and/or is arranged on a stop (11, 14) for the form-fitting attachment of the balancing body in one peripheral direction, in particular, is formed integrally therewith.

7. The rotor blade arrangement according to any of the preceding claims, **characterized in that** the undercut section (9, 10), for engaging under an axial shoulder (6; 7) of the ring, is configured for form-fitting attachment of the balancing body in one peripheral direction.

8. The rotor blade arrangement according to any of the preceding claims, **characterized in that** a stop (11) for the form-fitting attachment of the balancing body in one peripheral direction extends web-like in the radial direction.

9. The rotor blade arrangement according to any of the preceding claims, **characterized in that** the stop (11) for the form-fitting attachment of the balancing body in one peripheral direction (R) is brought into alignment with the shoulder (6; 7) by means of, in particular, plastic deformation.

10. The rotor blade arrangement according to any of the preceding claims, **characterized in that** the axial shoulder extends axially away from (6) an airfoil arrangement of the rotor blade arrangement or to (7) the airfoil arrangement.

11. The rotor blade arrangement according to any of the preceding claims, **characterized in that** the balancing body is arranged between two airfoils (2,3) of the rotor blade arrangement that are adjacent in one peripheral direction, and is spaced apart therefrom.

12. A method for attaching a balancing body (1) to the ring (4, 5) of a rotor blade arrangement according to any of the preceding claims, wherein at least one stop (11, 14) for the form-fitting attachment of the balancing body in one peripheral direction to an axial shoulder (6; 7) is, in particular, plastically brought into alignment with the shoulder.

13. A method for releasing a balancing body (1) from the ring (4, 5) of a rotor blade arrangement according to any of claims 1-11, wherein at least one stop (11, 14) for the form-fitting attachment of the balancing body in one peripheral direction to an axial shoulder (6; 7) is, in particular, plastically brought out of alignment with the shoulder.

## Revendications

1. Agencement d'aubes mobiles d'un étage de compresseur ou de turbine avec plusieurs aubes mobiles, un corps d'équilibrage (1) et un anneau, dans lequel l'anneau est un anneau radialement externe, qui est formé par des anneaux de renfort externes des aubes mobiles de l'agencement d'aubes mobiles ou est un anneau radialement interne (4, 5), qui est formé par des plateformes d'aubes mobiles de l'agencement d'aubes mobiles, **caractérisé en ce que** l'anneau présente un premier palier axial (6 ; 7) et le corps d'équilibrage (1) présente une première butée (11) avec laquelle il est fixé mécaniquement sur le premier palier axial (6 ; 7) de l'anneau dans une direction circonférentielle (R).

2. Agencement d'aubes mobiles selon la revendication précédente, **caractérisé par** une seconde butée (14) pour fixer le corps d'équilibrage mécaniquement dans un sens inverse dans une direction circonférentielle opposée sur un second palier axial (6 ; 7) de l'anneau.

3. Agencement d'aubes mobiles selon l'une quelconque des revendications précédentes, **caractérisé par** une première bride radiale (8.1) et une seconde bride radiale (8.2) axialement distante de la première et reliée par un étançon axial (13) pour fixer mécaniquement le corps d'équilibrage dans la direction axiale sur l'anneau.

4. Agencement d'aubes mobiles selon la revendication précédente, **caractérisé en ce qu'**une butée (11, 14) est agencée pour fixer mécaniquement le corps d'équilibrage sur la bride radiale (8.1, 8.2) dans une direction circonférentielle, en particulier conçue d'une seule pièce avec celle-ci, et/ou la bride radiale (8.1, 8.2) converge avec l'anneau en observant dans une direction de rotation (R).

5. Agencement d'aubes mobiles selon l'une quelconque des revendications précédentes, **caractérisé par** au moins une dépouille (9, 9a, 10) pour la fixation mécanique du corps d'équilibrage dans la direction radiale sur l'anneau.

6. Agencement d'aubes mobiles selon la revendication précédente, **caractérisé en ce que** la dépouille (9, 9a, 10) est agencée pour fixer mécaniquement le corps d'équilibrage sur la bride radiale (8.1, 8.2) dans la direction axiale et/ou une butée (11, 14) pour la fixation mécanique du corps d'équilibrage dans une direction circonférentielle, en particulier conçue d'un seul tenant avec celui-ci.

7. Agencement d'aubes mobiles selon l'une quelconque des revendications précédentes, **caractérisé en ce que** la dépouille (9, 10) est conçu pour s'engager sur un palier axial (6 ; 7) de l'anneau afin de fixer mécaniquement le corps d'équilibrage dans une direction circonférentielle.

8. Agencement d'aubes mobiles selon l'une quelconque des revendications précédentes, **caractérisé en ce qu'**une butée (11) s'étend pour la fixation mécanique du corps d'équilibrage dans une direction circonférentielle en forme d'étançon dans la direction radiale.

9. Agencement d'aubes mobiles selon l'une quelconque des revendications précédentes, **caractérisé en ce qu'**une butée (11) est amenée dans l'alignement avec le palier (6 ; 7) pour fixer mécaniquement le corps d'équilibrage dans une direction circonférentielle (R) par déformation en particulier plastique.

10. Agencement d'aubes mobiles selon l'une quelconque des revendications précédentes, **caractérisé en ce que** le palier axial s'écarte axialement d'un agencement de pales de l'agencement d'aubes mobiles (6) ou s'étend vers l'agencement de pales (7).

11. Agencement d'aubes mobiles selon l'une quelconque des revendications précédentes, **caractérisé en ce que** le corps d'équilibrage est agencé entre deux pales (2, 3) adjacentes dans la direction circonférentielle de l'agencement d'aubes mobiles et est séparé de celles-ci.

12. Procédé de fixation d'un corps d'équilibrage (1) sur l'anneau (4, 5) d'un agencement d'aubes mobiles selon l'une quelconque des revendications précédentes, dans lequel au moins une butée (11, 14) pour la fixation mécanique du corps d'équilibrage est amenée dans une direction circonférentielle sur un palier axial (6 ;7) de l'anneau, en particulier par déformation plastique, dans l'alignement avec le palier.

13. Procédé de séparation d'un corps d'équilibrage (1) de l'anneau (4, 5) d'un agencement d'aubes mobiles selon l'une quelconque des revendications 1 à 11, dans lequel au moins une butée (11, 14) pour la fixation mécanique du corps d'équilibrage est amenée dans une direction circonférentielle sur un palier axial (6 ; 7) de l'anneau, en particulier par déformation plastique, hors d'alignement avec le palier.
